# EUROPÄISCHE PATENTSCHRIFT

(11) **EP 3 985 293 B1**
(45) Veröffentlichungstag und Bekanntmachung des Hinweises auf die Patenterteilung: **05.06.2024**
(21) Anmeldenummer: 20202236.4
(22) Anmeldetag: 16.10.2020
(51) Int. Cl.: F16L 21/08, F16L 23/032, F16L 23/16, F16L 23/22, F16L 41/08, B60H 1/00

(54) **ANORDNUNG ZUR ABDICHTUNG EINER VERBINDUNG**
ASSEMBLY TO SEAL A CONNECTION
ENSEMBLE POUR RENDRE ÉTANCHE UNE CONNECTION

(43) Veröffentlichungstag der Anmeldung: 20.04.2022
(73) Patentinhaber: Carl Freudenberg KG, 69469 Weinheim (DE)
(72) Erfinder: MELCHER, Andreas, 79206 Breisach-Oberrimsinger (DE); VÖHRINGER, Marc-Christian, 79725 Laufenburg (DE); KUHNE, David, 79664 Wehr (DE); WUNDERLE, Raphael, 79871 Eisenbach (DE); WEISS, Rainer, 79736 Rickenbach (DE)

(56) Entgegenhaltungen:
- EP-A1- 3 670 990
- EP-A2- 1 873 437
- DE-A1- 3 520 949
- DE-A1- 4 231 824
- DE-A1- 10 261 887
- DE-A1-102007 035 223

## Beschreibung

Die Erfindung betrifft eine Anordnung zur Abdichtung einer Verbindung eines ersten Kupplungselementes mit einem zweiten Kupplungselement, wobei das erste Kupplungselement einen zumindest abschnittsweise konisch geformten Vorsprung aufweist und das zweite Kupplungselement mit einer zumindest abschnittsweise konisch geformten Ausnehmung versehen ist, wobei der Vorsprung in die Ausnehmung hineinragt, wobei sich zwischen Vorsprung und Ausnehmung ein Ringraum ergibt, in welchem ein Dichtring angeordnet ist, wobei der Dichtring zumindest abschnittsweise konisch ausgebildet ist und eine erste Stirnseite und eine zweite Stirnseite aufweist, wobei die erste Stirnseite in Richtung des Kühlmediums weist und die zweite Stirnseite in Richtung der Umgebung weist.

Eine derartige Anordnung ist aus der DE 10 2007 035 223 A1 bekannt. Dort ist beschrieben, dass Rohrleitungssysteme von Fahrzeugklimaanlagen für jede Verbindung ein lösbares Kupplungssystem aufweisen, welches aus zwei Kupplungselementen besteht. Zumeist ist ein erstes Kupplungselement ein mit einem Zapfen versehener Flansch, und ein zweites Kupplungselemente ist ein mit einer eingesenkten Ringnut versehener Flansch, die ineinander greifend verschraubt oder auf eine andere Weise verspannt werden. Die Dichtheit der Verbindung wird durch einen Dichtring gewährleistet, der zwischen den beiden Flanschen angeordnet ist. Bekannt ist beispielsweise ein Dichtelement in Form eines O-Ringes aus elastomerem Werkstoff. Ferner bekannt sind aus metallischen Scheiben oder Schneidringen ausgeformte Dichtungen.

Das vorbekannte Dichtelement ist zumindest teilweise konisch ausgebildet und in entsprechend geformte Aufnahmen der beiden Elemente eingelegt.

Problematisch ist, dass das Kühlmedium in einer Klimaanlage unter einem hohen Druck steht. Dies gilt insbesondere, wenn das Kühlmedium R744, entsprechend Kohlenstoffdioxid CO₂, ist. Beispielsweise weist CO₂ bei 20°C einen Siededruck von 57 bar auf. Schon allein vor diesem Hintergrund sind an das Dichtelement hohe Anforderungen gestellt. Des Weiteren bereitet eine Wiedermontage, beispielsweise im Rahmen einer Reparatur häufig Probleme.

EP 1 873 437 A2 zeigt eine Verbindungsanordnung mit zwei dichtend verbundenen Kupplungsstücken. Die Kupplungsstücke weisen jeweils auf der zum anderen Kupplungsstück weisenden Seite eine zumindest abschnittsweise konisch geformte Dichtfläche auf, wobei zwischen den Dichtflächen ein konisch geformter Dichtring angeordnet ist. Der Dichtring umfasst eine in Richtung der Längssachse des Dichtrings ausgebildete Wulst.

Somit liegt der Erfindung die Aufgabe zugrunde, die vorbekannte Anordnung derart weiterzuentwickeln, dass die Gefahr einer Leckage reduziert ist.

Diese Aufgabe wird mit den Merkmalen von Anspruch 1 gelöst. Auf vorteilhafte Ausgestaltungen nehmen die Unteransprüche Bezug.

Zur Lösung der Aufgabe ist der zweiten Stirnseite des Dichtrings ein umlaufender Wulst zugeordnet, welcher aus dem Dichtring ausgebildet ist und welcher in Richtung der Längsachse des Dichtrings weist. Grundsätzlich weist der Dichtring die Form eines Hohlkegelstumpfes auf, dessen Querschnitt sich radial in Richtung der Umgebung stetig erweitert. In diesem Zusammenhang ist es aber auch denkbar, dass der Dichtring zusätzlich Querschnittsveränderungen wie Stufen oder zylindrische Abschnitte aufweisen kann.

Die Formgebung des Dichtrings in Form eines Hohlkegelstumpfs bedeutet, dass die Stirnseite mit dem kleineren Querschnitt in das Innere der Anordnung weist, beispielsweise in Richtung der mit einem Kühlmedium druckbeaufschlagten Seite. Der Wulst wiederum ist der in Richtung der Umgebung zugewandten Stirnseite zugeordnet. Dabei weist der Wulst in Richtung der Längsachse des Dichtrings, also radial nach innen. Ein derartiger Dichtring ist einfach montierbar, da der Dichtring aufgrund seiner Querschnittsverjüngung einfach auf den Vorsprung des ersten Kupplungselementes aufgeschoben werden kann. Wird das zweite Kupplungselement in das erste Kupplungselement eingeschoben, legt sich der Wulst an die Innenwand der Ausnehmung des zweiten Kupplungselementes an und verbessert so die Dichtwirkung der Anordnung und reduziert insbesondere die Gefahr einer Leckage.

Durch die Wulst ist der Dichtring darüber hinaus formschlüssig auf dem Kupplungselement gehalten. Dies ist insbesondere vorteilhaft, wenn die Kupplung im Rahmen einer Wartung oder Reparatur geöffnet und wieder geschlossen werden soll. Beim Lösen der Kupplung verbleibt der Dichtring aufgrund der formschlüssigen Verbindung auf dem ersten Kupplungselement. Beim Verschließen der Kupplung ist dabei der Dichtring lagerichtig auf dem ersten Kupplungselement fixiert. Dadurch ist es möglich, die Kupplung mehrfach zu öffnen und zu verschließen, wobei es jeweils nicht erforderlich ist, den Dichtring auszutauschen.

In einer vorteilhaften Ausgestaltung ist der Wulst halbkreisförmig ausgebildet. Dadurch legt sich der Wulst bei Montage linienförmig an den Vorsprung des ersten Kupplungselementes an, wodurch sich bei Kompression des Wulstes während der Montage eine hohe Anpressung und damit eine hohe Dichtwirkung ergeben. Dabei ist die Halbkreisform mechanisch so stabil, dass der Wulst auch hohem Druck standhält, ohne dass sich dieser von dem Dichtring ablöst.

Die Dichtwirkung der Wulst verbessert sich insbesondere dann, wenn der Wulst mit radialer Vorspannung an dem ersten Element anliegt.

Vorzugsweise ist der Vorsprung zur Aufnahme der Wulst mit einer umlaufenden Nut versehen. Dadurch ist der Dichtring formschlüssig auf dem Vorsprung gehalten, was insbesondere während der Montage der Anordnung vorteilhaft ist, weil der Dichtring verliersicher gesichert ist. Des Weiteren verbessert die definierte Aufnahme der Wulst in der Nut die Dichtwirkung.

Erfindungsgemäß ist in dem Ringraum ein Zentrierring angeordnet. Der Zentrierring stellt einen definierten Zwischenraum zwischen dem ersten Kupplungselement und dem zweiten Kupplungselement im Bereich von Vorsprung und Ausnehmung sicher. Dadurch erhöht sich die Betriebssicherheit der Anordnung und die Montage wird vereinfacht.

Der Zentrierring ist dabei vorzugsweise an dem freien Ende des Vorsprungs angeordnet. Dadurch gelangen die Kupplungselemente während der Montage zunächst über den Zentrierring miteinander in Kontakt, was eine lagerichtige Montage der Anordnung erleichtert. Des Weiteren schützt der Zentrierring den Dichtring während der Montage.

Vorzugsweise ist der Zentrierring formschlüssig auf dem Vorsprung gehalten. Dadurch ist der Zentrierring verliersicher auf dem Vorsprung gesichert, was insbesondere während der Montage vorteilhaft ist.

Die Ausnehmung kann in dem dem Zentrierring zugeordneten Abschnitt zylindrisch ausgebildet sein und der Zentrierring kann außenumfangsseitig zylindrisch ausgebildet sein. Dadurch fluchten der Vorsprung und die Ausnehmung der Kupplungselemente während der Montage.

In das erste Kupplungselement und das zweite Kupplungselement können Bohrungen eingebracht sein, wobei in zumindest einer Anordnung einander fluchtender Bohrungen ein Stift angeordnet sein kann. Vorzugsweise werden die Kupplungselemente mittels einer Schraubverbindung fest miteinander verbunden. Die Bohrungen und der in einem Paar Bohrungen angeordnete Stift verhindert, dass sich die Kupplungselemente zueinander verdrehen, was wiederum die Montage der Schraubverbindung erschweren würde.

In das erste Kupplungselement und in das zweite Kupplungselement können jeweils zwei Bohrungen eingebracht sein, wobei einander gegenüberliegende Bohrungen von erstem Kupplungselement und zweitem Kupplungselement fluchten. Bei dieser Ausgestaltung kann die Anordnung mit zwei Stiften ausgerüstet sein. Hierbei ist vorteilhaft, dass mittels der Anordnung der Stifte eine Codierung der Kupplungselemente möglich ist. Dadurch können beispielsweise Kupplungselemente mit unterschiedlicher Ausrüstung montiert werden. Gemäß einer vorteilhaften Anwendung in Klimaanlagen von Kraftfahrzeugen gelangen unterschiedliche Dichtringe zum Einsatz, wobei ein Dichtring für die Hochdruckseite und ein zweiter Dichtring für die Niederdruckseite der Klimaanlage vorgesehen ist. Das erste Kupplungselement und das zweite Kupplungselement können dabei jeweils mit einem Stift ausgerüstet sein, welche so in den Elementen angeordnet sind, dass jeweils nur Kupplungselemente für die entsprechende Anwendung gefügt werden können. In diesem Sinne erfolgt durch die Anordnung der Bohrungen und Stifte eine Codierung. Im Zusammenspiel mit dem formschlüssig auf dem Vorsprung gehaltenen Dichtring ist eine besonders einfache Montage möglich, wobei es insbesondere möglich ist, die Kupplung blind zu montieren, so dass eine Montage auch in schwer erreichbaren und nicht einsehbaren Bereichen möglich ist.

In einer vorteilhaften Ausgestaltung ist die erste Stirnseite unter einem Winkel von weniger als 90° relativ zur Längsachse des Dichtringes geneigt.

In diesem Zusammenhang ist es insbesondere vorteilhaft, wenn die erste Stirnseite eine erste Kante und eine zweite Kante aufweist, wobei die erste Kante in den Ringraum weist. Bei dieser Ausgestaltung ist der Dichtring im Bereich der ersten Stirnseite so geneigt, dass lediglich die erste Kante mit dem im Inneren der Anordnung herrschenden Druck, beispielsweise mit dem Druck des Kühlmediums beaufschlagt ist, wohingegen die zweite Kante bereits auf der druckabgewandten Seite angeordnet ist. Hierbei ist insbesondere vorteilhaft, dass der Kraftfluss, welcher durch den Druck des Kühlmediums ausgeübt wird, in das Innere des Dichtrings weist. Vorzugsweise ist die Stirnseite derart geneigt, dass der Kraftfluss unter einem Winkel von 45° relativ zur Stirnseite in den Dichtring hineinweist. Bei dieser Ausgestaltung verursacht der durch das Kühlmedium ausgeübte Druck, dass sich der Dichtring von der druckbeaufschlagten ersten Kante weg in Richtung der zweiten Kante und gleichzeitig in Richtung der Wulst verdrängt wird.

Dabei presst sich der Dichtring an das erste Kupplungselement an, was zu einer signifikanten Verbesserung der Dichtwirkung führt.

Diese vorteilhafte Dichtwirkung wird dadurch nochmals verbessert, wenn der Dichtring eine Innenwand und eine Außenwand aufweist, wobei die durch die erste Stirnseite gebildete Ringfläche einen Winkel von 90° relativ zur Innenseite einschließt.

Ebenso ist es vorteilhaft, wenn die durch die erste Stirnseite gebildete Ringfläche einen Winkel von 90° relativ zur Außenwand einschließt.

Vorzugsweise ist der Dichtring aus elastomerem Werkstoff, insbesondere aus Ethylen-Propylen-Dien-Monomer (EPDM) ausgebildet. Dieser Werkstoff weist eine Resistenz gegen die meisten Kühlmedien, insbesondere auch gegenüber R744 auf.

Die Konizität des Dichtrings ist vorzugsweise derart gewählt, dass die Innenwand relativ zur Längsachse des Dichtrings um einen Winkel von 10° bis 30°, vorzugsweise um 15° geneigt ist.

In einer erfindungsgemäßen Verwendung kommt die Anordnung in einer Klimaanlage, insbesondere in einer mobilen Klimaanlage eines Fahrzeugs zum Einsatz.

Einige Ausführungsbeispiele der erfindungsgemäßen Anordnung werden nachfolgend anhand der Figuren näher erläutert. Diese zeigen, jeweils schematisch:
- Fig. 1: eine Anordnung einer Klimaanlage;
- Fig. 2: den Dichtring im Schnitt;
- Fig. 3: einen Dichtring mit radial verlaufender erster Stirnseite;
- Fig. 4: eine erfindungsgemäße Anordnung mit Zentrierring;
- Fig. 5: eine Anordnung mit Zentrierstiften.

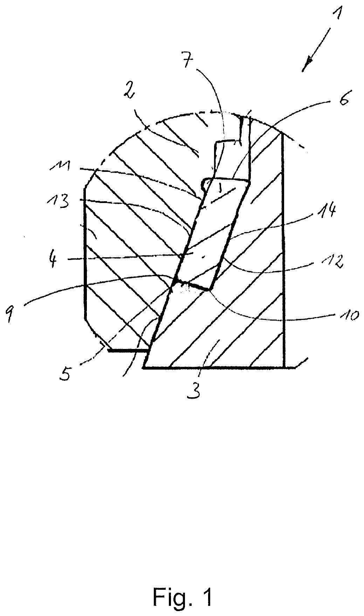

Figur 1 zeigt eine Anordnung 1 zur Abdichtung einer Verbindung eines ersten Kupplungselementes 2 mit einem zweiten Kupplungselement 3 einer Klimaanlage.

Die Klimaanlage ist als Fahrzeugklimaanlage ausgebildet und beinhaltet ein erstes Kupplungselement 2 und ein zweites Kupplungselement 3. Das erste Kupplungselement 2 und das zweite Kupplungselement 3 können dabei Rohrabschnitte der Klimaanlage oder Ein- und/oder Ausgänge von Klimaanlagenkomponenten wie beispielsweise Kompressor, Verdampfer, Expansionsventil oder Kondensator aufnehmen, wobei diese Komponenten vorzugsweise stoffschlüssig an die Kupplungselemente 2, 3 angebunden sind.

Das erste Kupplungselement 2 weist einen abschnittsweise konisch geformten Vorsprung 13 auf und das zweite Kupplungselement 3 weist eine abschnittsweise konisch geformte Ausnehmung 14 auf. Dabei ragt der Vorsprung 13 in die Ausnehmung 14 hinein und zwischen Vorsprung 13 und Ausnehmung 14 ergibt sich ein Ringraum 15. In dem Ringraum 15 ein Dichtring 4 angeordnet 1 1 4, wobei der Dichtring 4 das in dem ersten Kupplungselement 2 und das in dem zweiten Kupplungselement 3 geführte Kühlmedium gegenüber der Umgebung abdichtet. Vorsprung 13 und Ausnehmung 14 bilden somit einen Dichtsitz zur Aufnahme des Dichtrings 4. Ein bevorzugtes Kühlmedium ist in diesem Zusammenhang R744. Der Dichtring 4 ist vorzugsweise aus Ethylen-Propylen-Dien-Monomer (EPDM) ausgebildet.

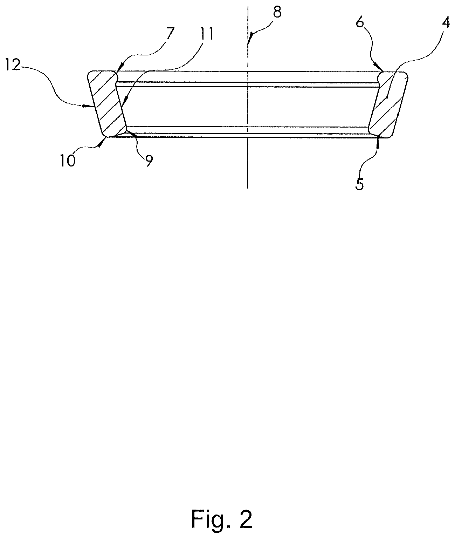

Figur 2 zeigt den Dichtring 4 im Schnitt. Der Dichtring 4 ist zur Abdichtung des Kühlmediums konisch ausgebildet und weist eine erste Stirnseite 5 und eine zweite Stirnseite 6 auf. Dabei ist die erste Stirnseite 5 mit dem Druck des Kühlmediums beaufschlagt und die zweite Stirnseite 6 der Umgebung zugewandt.

Der zweiten Stirnseite 6 ist ein umlaufender Wulst 7 zugeordnet, der in Richtung der Längsachse 8 des Dichtrings 4 weist. Der Wulst 7 ist halbkreisförmig ausgebildet und liegt mit radialer Vorspannung an dem Vorsprung 13 an. Zur Aufnahme des Dichtrings 4 ist in den Vorsprung 13 eine umlaufende Nut 16 eingebracht.

Die erste Stirnseite 5 ist unter einem Winkel von weniger als 90° relativ zur Längsachse 8 geneigt. Dabei weist die erste Stirnseite 5 eine erste Kante 9 und eine zweite Kante 10 aufweist, wobei die erste Kante 9 mit dem Druck des Kühlmediums beaufschlagt ist.

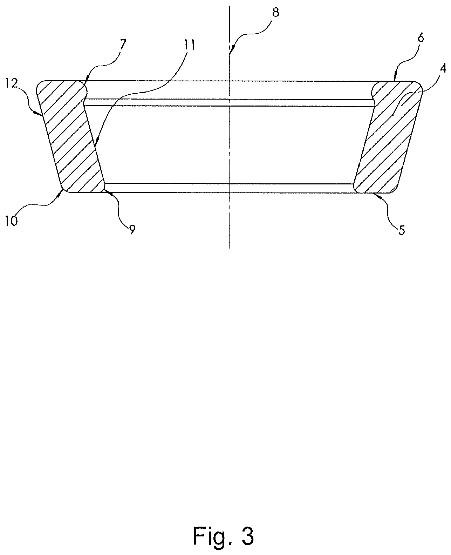

Der Dichtring 4 weist eine Innenwand 11 und eine Außenwand 12 auf, wobei die durch die erste Stirnseite 5 gebildete Ringfläche einen Winkel von 90° relativ zur Innenwand 11 einschließt. Die durch die erste Stirnseite 5 gebildete Ringfläche schließt einen Winkel von 90° relativ zur Außenwand 12 ein. Die Innenwand 11 ist relativ zur Längsachse 8 um einen Winkel von 15° geneigt. Figur 3 zeigt einen Dichtring 4 gemäß Figur 2, wobei die erste Stirnseite 5 bei der vorliegenden Ausgestaltung in einer Radialebene verläuft. Insofern schließt die durch die erste Stirnseite 5 gebildete Ringfläche zu der Längsachse 8 einen Winkel von 90° ein.

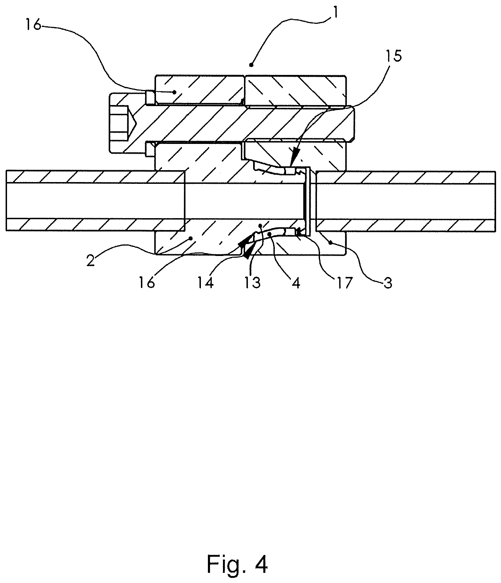

Figur 4 zeigt eine erfindungsgemäße Weiterbildung der in den Figuren 1, 2 und 3 gezeigten Anordnung. Bei dieser Ausgestaltung ist in dem Ringraum 15 ein Zentrierring 17 angeordnet. Der Zentrierring 17 ist aus polymerem Material ausgebildet und an dem freien Ende des Vorsprungs 13 angeordnet. Der Zentrierring 17 ist formschlüssig auf dem Vorsprung 13 gehalten. Hierzu weisen der Zentrierring 17 und der Vorsprung 13 ein kongruent geformtes Sägezahnprofil auf. Die Ausnehmung 14 ist in dem dem Zentrierring 17 zugeordneten Abschnitt zylindrisch ausgebildet ist und der Zentrierring 17 ist außenumfangsseitig zylindrisch ausgebildet. Der Dichtring 4 ist entsprechend Figur 3 ausgestaltet. Der Vorsprung 13 und die Ausnehmung 14 weisen einen zylindrischen und einen konischen Abschnitt auf, so dass der Dichtring 4 abgebogen ist. Dadurch verlängert sich der Permeationsweg für das abzudichtende Medium, was die Dichtheit der Anordnung 1 verbessert.

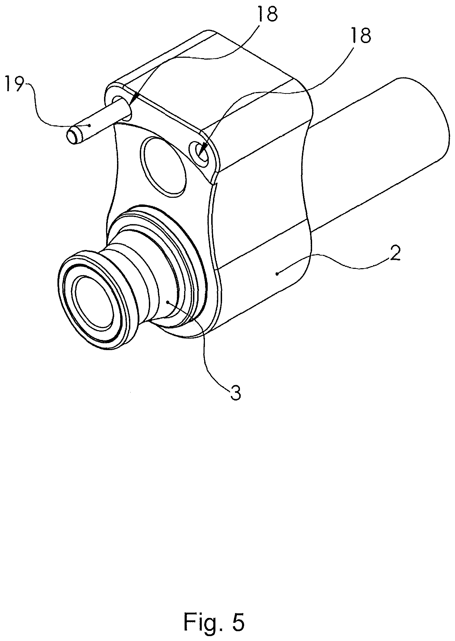

Figur 5 zeigt eine weitere Ausgestaltung der zuvor beschriebenen Anordnung 1. Bei dieser Ausgestaltung sind in das erste Kupplungselement 2 und das zweite Kupplungselement 3 jeweils zwei Bohrungen 18 eingebracht, wobei einander gegenüberliegende Bohrungen 18 von erstem Kupplungselement 2 und zweitem Kupplungselement 3 fluchten. In jedem Paar von Bohrungen 18 ist ein Stift 19 angeordnet, wobei ein Stift 19 an dem Kupplungselement 2 und ein Stift an dem zweiten Kupplungselement 3 festgelegt ist.

## Patentansprüche

1. Anordnung (1) mit einem ersten (2) und zweiten (3) Kupplungselement, einem Dichtring (4) und einem Zentrierring (17) zur Abdichtung einer Verbindung des ersten Kupplungselementes (2) mit dem zweiten Kupplungselement (3), wobei das erste Kupplungselement (2) einen zumindest abschnittsweise konisch geformten Vorsprung (13) aufweist und das zweite Kupplungselement (3) mit einer zumindest abschnittsweise konisch geformten Ausnehmung (14) versehen ist, wobei der Vorsprung (13) in die Ausnehmung (14) hineinragt, wobei sich zwischen Vorsprung (13) und Ausnehmung (14) ein Ringraum (15) ergibt, in welchem der Dichtring (4) angeordnet ist, wobei der Dichtring (4) zumindest abschnittsweise konisch ausgebildet ist und eine erste Stirnseite (5) und eine zweite Stirnseite (6) aufweist, wobei die erste Stirnseite (5) in Richtung des Ringraums (15) weist und die zweite Stirnseite (6) in Richtung der Umgebung weist, wobei der zweiten Stirnseite (6) ein umlaufender Wulst (7) zugeordnet ist, welcher aus dem Dichtring (4) ausgebildet ist und welcher in Richtung der Längsachse (8) des Dichtrings (4) weist, **dadurch gekennzeichnet, dass** in dem Ringraum (15) der Zentrierring (17) angeordnet ist.

2. Anordnung nach Anspruch 1, **dadurch gekennzeichnet, dass** der Wulst (7) mit radialer Vorspannung an dem ersten Kupplungselement (2) anliegt.

3. Anordnung nach Anspruch 2, **dadurch gekennzeichnet, dass** der Vorsprung (13) zur Aufnahme der Wulst (7) mit einer umlaufenden Nut (16) versehen ist.

4. Anordnung nach Anspruch 1, **dadurch gekennzeichnet, dass** der Zentrierring (17) an dem freien Ende des Vorsprungs (13) angeordnet ist.

5. Anordnung nach Anspruch 1 oder 4, **dadurch gekennzeichnet, dass** der Zentrierring (17) formschlüssig auf dem Vorsprung (13) gehalten ist.

6. Anordnung nach einem der Ansprüche 1, 4 oder 5, **dadurch gekennzeichnet, dass** die Ausnehmung (14) in dem dem Zentrierring (17) zugeordneten Abschnitt zylindrisch ausgebildet ist und dass der Zentrierring (17) außenumfangsseitig zylindrisch ausgebildet ist.

7. Anordnung nach einem der Ansprüche 1 bis 6, **dadurch gekennzeichnet, dass** in das erste Kupplungselement (2) und das zweite Kupplungselement (3) Bohrungen (18) eingebracht sind, wobei in zumindest einer Anordnung einander fluchtender Bohrungen (18) ein Stift (19) angeordnet ist.

8. Anordnung nach Anspruch 7, **dadurch gekennzeichnet, dass** in das erste Kupplungselement (2) und das zweite Kupplungselement (3) jeweils zwei Bohrungen (18) eingebracht sind, wobei einander gegenüberliegende Bohrungen (18) von erstem Kupplungselement (2) und zweitem Kupplungselement (3) fluchten.

9. Anordnung nach einem Ansprüche 1 bis 8, **dadurch gekennzeichnet, dass** die erste Stirnseite (5) eine erste Kante (9) und eine zweite Kante (10) aufweist, wobei die erste Kante (9) mit dem Druck des Kühlmediums beaufschlagt ist.

10. Anordnung nach einem der Ansprüche 1 bis 6, **dadurch gekennzeichnet, dass** der Dichtring (4) aus elastomerem Werkstoff, vorzugsweise aus Ethylen-Propylen-Dien-Monomer (EPDM) ausgebildet ist.

11. Verwendung der Anordnung (1) nach einem der vorherigen Ansprüche als Kupplung zweier Komponenten einer Klimaanlage.

## Claims

1. Arrangement (1) comprising a first coupling element (2) and a second coupling element (3), a sealing ring (4) and a centring ring (17) for sealing off a connection of the first coupling element (2) to the second coupling element (3), wherein the first coupling element (2) has an at least sectionally conically shaped projection (13) and the second coupling element (3) is provided with an at least sectionally conically shaped recess (14), wherein the projection (13) projects into the recess (14), wherein, between projection (13) and recess (14), there is formed an annular space (15) in which the sealing ring (4) is arranged, wherein the sealing ring (4) is at least sectionally of conical form and comprises a first end face (5) and a second end face (6), wherein the first end face (5) is oriented in the direction of the annular space (15) and the second end face (6) is oriented in the direction of the surroundings, wherein the second end face (6) is assigned an encircling bead (7) which is formed from the sealing ring (4) and which is oriented in the direction of the longitudinal axis (8) of the sealing ring (4), **characterized in that** the centring ring (17) is arranged in the annular space (15).

2. Arrangement according to claim 1, **characterized in that** the bead (7) bears with radial preload against the first coupling element (2).

3. Arrangement according to claim 2, **characterized in that**, for receiving the bead (7), the projection (13) is provided with an encircling groove (16).

4. Arrangement according to claim 1, **characterized in that** the centring ring (17) is arranged on the free end of the projection (13).

5. Arrangement according to claim 1 or 4, **characterized in that** the centring ring (17) is held in a form-fitting manner on the projection (13).

6. Arrangement according to one of claims 1, 4 or 5, **characterized in that** the recess (14) is of cylindrical form in the section assigned to the centring ring (17), and **in that** the centring ring (17) is of cylindrical form at the outer circumference.

7. Arrangement according to one of claims 1 to 6, **characterized in that** bores (18) are formed in the first coupling element (2) and the second coupling element (3), wherein a pin (19) is arranged in at least one arrangement of mutually aligned bores (18) .

8. Arrangement according to claim 7, **characterized in that** in each case two bores (18) are formed in the first coupling element (2) and the second coupling element (3), wherein mutually opposite bores (18) of first coupling element (2) and second coupling element (3) are aligned.

9. Arrangement according to one of claims 1 to 8, **characterized in that** the first end face (5) has a first edge (9) and a second edge (10), wherein the first edge (9) is subjected to the pressure of the cooling medium.

10. Arrangement according to one of claims 1 to 6, **characterized in that** the sealing ring (4) is formed from elastomer material, preferably from ethylene propylene diene monomer (EPDM).

11. Use of the arrangement (1) according to one of the preceding claims as a coupling for two components of an air-conditioning system.

## Revendications

1. Ensemble (1) comprenant un premier (2) et un deuxième (3) élément d'accouplement, une bague d'étanchéité (4) et une bague de centrage (17) afin d'étanchéifier la liaison du premier élément d'accouplement (2) au deuxième élément d'accouplement (3), le premier élément d'accouplement (2) comportant une saillie (13) qui est de forme conique au moins par portions et le deuxième élément d'accouplement (3) étant pourvu d'un évidement (14) qui est de forme conique au moins par portions, la saillie (13) faisant saillie dans l'évidement (14), résultant dans un espace annulaire (15), dans lequel est disposée la bague d'étanchéité (4), étant ménagé entre la saillie (13) et l'évidement (14), la bague d'étanchéité (4) étant conique au moins par portions et comportant une première face frontale (5) et une deuxième face frontale (6), la première face frontale (5) pointant en direction de l'espace annulaire (15) et la deuxième face frontale (6) pointant en direction de l'environnement, la deuxième face frontale (6) étant associée à un bourrelet circonférentiel (7) qui est formé à partir de la bague d'étanchéité (4) et qui pointe en direction de l'axe longitudinal (8) de la bague d'étanchéité (4), **caractérisé en ce que** la bague de centrage (17) est disposée dans l'espace annulaire (15).

2. Ensemble selon la revendication 1, **caractérisé en ce que** le bourrelet (7) vient en appui sur le premier élément d'accouplement (2) avec une précontrainte radiale.

3. Ensemble selon la revendication 2, **caractérisé en ce que** la saillie (13) est pourvue d'une rainure circonférentielle (16) destinée à recevoir le bourrelet (7) .

4. Ensemble selon la revendication 1, **caractérisé en ce que** la bague de centrage (17) est disposée à l'extrémité libre de la saillie (13).

5. Ensemble selon la revendication 1 ou 4, **caractérisé en ce que** la bague de centrage (17) est maintenue sur la saillie (13) par complémentarité de formes.

6. Ensemble selon l'une des revendications 1, 4 ou 5, **caractérisé en ce que** l'évidement (14) dans la portion associée à la bague de centrage (17) est cylindrique et **en ce que** la bague de centrage (17) est cylindrique sur la circonférence extérieure.

7. Ensemble selon l'une des revendications 1 à 6, **caractérisé en ce que** des alésages (18) sont ménagés dans le premier élément d'accouplement (2) et le deuxième élément d'accouplement (3), une broche (19) étant disposée dans au moins un ensemble d'alésages alignés (18) .

8. Ensemble selon la revendication 7, **caractérisé en ce que** deux alésages (18) sont ménagés dans le premier élément d'accouplement (2) et le deuxième élément d'accouplement (3), des alésages opposés (18) étant alignés du premier élément d'accouplement (2) et du deuxième élément d'accouplement (3).

9. Ensemble selon l'une des revendications 1 à 8, **caractérisé en ce que** la première face frontale (5) comporte un premier bord (9) et un deuxième bord (10), le premier bord (9) étant soumis à la pression du milieu de refroidissement.

10. Ensemble selon l'une des revendications 1 à 6, **caractérisé en ce que** la bague d'étanchéité (4) est en une matière élastomère, de préférence le monomère éthylène-propylène-diène (EPDM).

11. Utilisation de l'ensemble (1) selon l'une des revendications précédentes comme l'accouplement de deux composants d'une installation de climatisation.
